# EUROPEAN PATENT SPECIFICATION

(11) **EP 3 930 296 B1**
(45) Date of publication and mention of the grant of the patent: **23.08.2023**
(21) Application number: 20773438.5
(22) Date of filing: 04.03.2020
(51) Int. Cl.: H04M 1/02, G06F 1/16, H04M 1/22

(54) **MOBILE TERMINAL AND MIDDLE FRAME**
MOBILES ENDGERÄT UND MITTELRAHMEN
TERMINAL MOBILE ET CADRE INTERMÉDIAIRE

(30) Priority: 19.03.2019 CN 201920354727 U
(43) Date of publication of application: 29.12.2021
(73) Proprietor: GUANGDONG OPPO MOBILE TELECOMMUNICATIONS CORP., LTD., Dongguan, Guangdong 523860 (CN)
(72) Inventor: LI, Zhen, Dongguan, Guangdong 523860 (CN); WEN, Quanhao, Dongguan, Guangdong 523860 (CN)
(74) Representative: Manitz Finsterwald Patent- und Rechtsanwaltspartnerschaft mbB
(86) International application number: PCT/CN2020/077680
(87) International publication number: WO 2020/187020

(56) References cited:
- US-A1- 2010 053 861
- US-A1- 2011 165 916

## Description

### FIELD

This application relates to the technical field of mobile terminals, and more particularly, to a mobile terminal and a middle frame.

### BACKGROUND

A front camera is generally arranged at a top end of a mobile terminal, and a light entrance region of the front camera needs to be reserved between an edge of a display screen and an edge of the middle frame, which leads to a larger distance between the edge of the display screen and the top end of the mobile terminal, that is, a top frame of the middle frame has a great height, which is less aesthetic.

US 2010/0053861 A1 provides a mobile terminal that includes a housing having an opening, a display provided in the opening of the housing, a bezel provided on the housing, and at least one sensor or a touch screen/sensor provided at the bezel. The at least one sensor or touch screen detects a user selection on the bezel such that an image on the display changes or a command is performed by the mobile terminal. The sensor or the touch screen/sensor also allows images on the main display to be not hidden because items or commands are selected on the bezel.

US 2011/0165916 A1 relates to a mobile terminal, and more particularly, to a mobile terminal which can enlarge a transparent portion region, increase design freedoms, provide transparent mounting regions by forming various electronic components of a transparent material, and produce a variety of light emission pattern in particular scenarios by using the transparent portion region.

CN 108 712 524 A provides a mobile terminal. The mobile terminal includes a casing, a light source, and a cover plate; the casing includes a light blocking region and a light transmitting region, in which the light transmittance of the light transmitting region is higher than a preset value; the light transmitting region includes a bottom frame and a side frame; the top portion of the side frame is provided with a clamping groove; the cover plate is fixedly clamped in the clamping groove through a transparent adhesive; a groove is arranged on the inner surface of the bottom frame of the light transmitting region; and the groove accommodates the light source.

### SUMMARY

The invention is defined by the independent claim.

In view of the above, it is necessary to provide a mobile terminal and a middle frame.

A mobile terminal includes: a display screen assembly, including a display screen; and a middle frame, including a frame body and a light transmission part located on top of the frame body, in which the frame body includes a bottom frame body and a lining plate arranged opposite to each other, and the light transmission part covers the lining plate; the lining plate includes a second receiving block, the light transmission part includes a recess, and the second receiving block protrudes beyond a side of the lining plate facing away from the bottom frame body and is received in the recess.

According to an embodiment of the present disclosure, a thickness of the lining plate is less than a thickness of the bottom frame body.

According to an embodiment of the present disclosure, the frame body includes a first outer surface and a first fitting surface connected with each other, the first fitting surface is located on the side of the lining plate facing away from the bottom frame body, and the first outer surface is located on a periphery of the first fitting surface. The light transmission part includes a second outer surface and a second fitting surface directed away from each other, and an edge of the second outer surface is connected to an edge of the second fitting surface. The first fitting surface and the second fitting surface are bonded with each other.

According to an embodiment of the present disclosure, the second outer surface is smoothly connected to the first outer surface.

According to an embodiment of the present disclosure, the lining plate includes a first receiving block protruding beyond the first fitting surface; the second receiving block is closer to the display screen assembly than the first receiving block; and an inner cavity of the first receiving block is in communication with an inner cavity of the second receiving block.

According to an embodiment of the present disclosure, the first receiving block includes a top surface; a through slot is arranged in the light transmission part and cooperates with the first receiving block, and the through slot penetrates the second outer surface and the second fitting surface; the first receiving block is arranged in and passes through the through slot; and the top surface is smoothly connected to the second outer surface.

According to an embodiment of the present disclosure, the recess is located on a side of the light transmission part towards the display screen assembly, and penetrates an edge of the second outer surface and an edge of the second fitting surface; the second receiving block is located at an edge of a side of the first fitting surface towards the display screen assembly, and a part of the first outer surface forms a front surface of the second receiving block, and the front surface is smoothly connected to the second outer surface.

According to an embodiment of the present disclosure, the mobile terminal includes a camera module, and the camera module includes: a base having a partial structure received in the first receiving block; a lens barrel connected to the base and having a partial structure received in the second receiving block; and a flexible circuit board connected to the base.

According to an embodiment of the present disclosure, the camera module includes a light entrance lens exposed outside the lens barrel; a groove is arranged in the second receiving block and penetrates the front surface; a first through hole is arranged in the second receiving block and penetrates a groove bottom of the groove; and the light entrance lens is exposed through the first through hole.

According to an embodiment of the present disclosure, the mobile terminal includes a battery cover. The battery cover and the display screen assembly are located on both sides of the frame body. The display screen assembly includes a cover plate, a first optical adhesive layer, a polarizer, a display screen, a second optical adhesive layer, foam and a heat sink arranged sequentially in a direction toward the battery cover. The display screen is a rectangle or a rectangle with rounded corners.

According to an embodiment of the present disclosure, the cover plate includes a substrate and a bump connected with each other, and the bump protrudes from an edge of the substrate; and the substrate covers the display screen, and the bump is received in the groove.

According to an embodiment of the present disclosure, the bump has a third outer surface facing away from the light entrance lens, and the bump includes a first side surface, a second side surface and a third side surface. The first side surface is connected between the second side surface and the third side surface, the second side surface and the third side surface are arranged opposite to each other, and the first side surface is located at a tail end of the bump away from the substrate; and the first side surface and the third outer surface meet to form a right angle.

According to an embodiment of the present disclosure, the bump has a third outer surface facing away from the light entrance lens, and the bump includes a first side surface located at a tail end of the bump away from the substrate. A width of a chamfer between the first side surface and the third outer surface is 0.1 mm - 0.15 mm. The substrate includes a second side surface, a third side surface and a fourth outer surface, the first side surface connects the second side surface and the third side surface, and the fourth outer surface is coplanar with the third outer surface. A width of a chamfer between the second side surface and the fourth outer surface is 0.1 mm - 0.15 mm, and a width of a chamfer between the third side surface and the third outer surface is 0.1 mm - 0.15 mm.

According to an embodiment of the present disclosure, the bump has a third outer surface facing away from the light entrance lens, and the bump includes a first side surface located at a tail end of the bump away from the substrate. The first side surface and the third outer surface meet to form a right angle. The substrate includes a second side surface, a third side surface and a fourth outer surface, the first side surface connects the second side surface and the third side surface, and the fourth outer surface is coplanar with the third outer surface. The second side surface is smoothly transitioned to the fourth outer surface, and the third side surface is smoothly transitioned to the fourth outer surface.

### BRIEF DESCRIPTION OF THE DRAWINGS

In order to more clearly illustrate embodiments of the present application or the technical solutions in the related art, accompanying drawings used in the description of embodiments or the related art will be briefly introduced below. It is apparent that the accompanying drawings described below only illustrate some embodiments of the present application. For an ordinary skilled person in the art, accompanying drawings of other embodiments may also be obtained according to these accompanying drawings without creative labor.
FIG. 1 is a perspective view of a mobile terminal according to an embodiment;
FIG. 2a is a front view of the mobile terminal shown in FIG. 1;
FIG. 2b is a schematic view of a first edge line and a second edge line of the mobile terminal shown in FIG. 2a;
FIG. 3 is a left view of the mobile terminal shown in FIG. 2a;

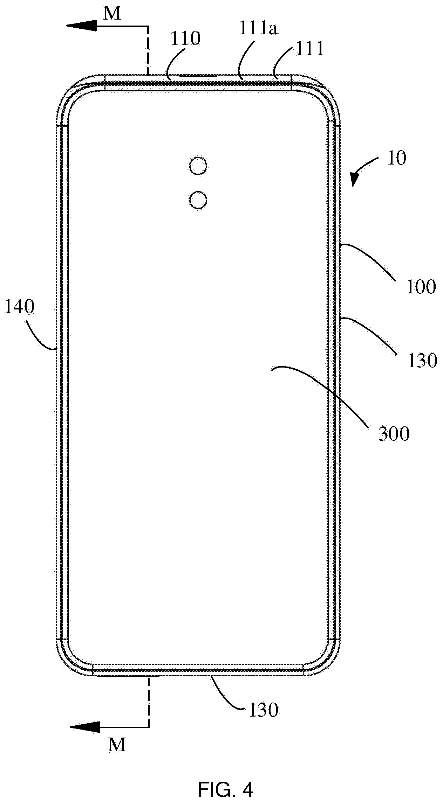

FIG. 4 is a rear view of the mobile terminal shown in FIG. 1;
FIG. 5 is a top view of the mobile terminal shown in FIG. 4;
FIG. 6 is an exploded view of the mobile terminal shown in FIG. 1;
FIG. 7 is an enlarged view of a structure at part A of the mobile terminal shown in FIG. 6;
FIG. 8 is a perspective view of a light transmission part of the mobile terminal shown in FIG. 6 from a view of angle;
FIG. 9 is a perspective view of the light transmission part of the mobile terminal shown in FIG. 6 from another view of angle;
FIG. 10 is a perspective view of a middle frame of the mobile terminal shown in FIG. 6;
FIG. 11 is an enlarged view of a structure at part B of the mobile terminal shown in FIG. 6;
FIG. 12 is an enlarged view of a structure at part H of the mobile terminal shown in FIG. 6;
FIG. 13 is a sectional view along line L-L of the mobile terminal shown in FIG. 2a;
FIG. 14 is an enlarged view of a structure at part C of the mobile terminal shown in FIG. 13 in an embodiment;
FIG. 15 is an enlarged view of a structure at part D of the mobile terminal shown in FIG. 13;
FIG. 16 is an enlarged view of a structure at part C of the mobile terminal shown in FIG. 13 in another embodiment;
FIG. 17 is a sectional view along line M-M of the mobile terminal shown in FIG. 4;
FIG. 18 is an enlarged view of a structure at part E of the mobile terminal shown in FIG. 17;
FIG. 19 is a schematic view of a mobile terminal according to an embodiment of the present application.

### DETAILED DESCRIPTION

For ease of understanding the present application, the present application will be described more comprehensively below with reference to accompanying drawings. Preferred embodiments of the present application are illustrated in the accompanying drawings. However, the present application may be implemented in many different forms and is not limited to the embodiments described herein. On the contrary, these embodiments are provided for more thorough and comprehensive understanding of the disclosure of the present application.

"Terminal equipment" as used herein refers to a device capable of receiving and/or sending communication signals by any one or more of the following connection modes, including but not limited to:
(1) wired connections, such as Public Switched Telephone Networks (PSTN), Digital Subscriber Line (DSL), digital cables, direct cables;
(2) wireless interfaces, such as cellular networks, Wireless Local region Network (WLAN), digital television networks such as DVB-H networks, satellite networks, AM-FM broadcast transmitters.

The terminal device configured to communicate through wireless interfaces may be referred to as a "mobile terminal". Examples of mobile terminals include but are not limited to the following electronic devices:
(1) satellite phones or cellular phones;
(2) personal communications system (PCS) terminals that may integrate cellular radio telephones and data processing, faxing and data communication capabilities;
(3) radiotelephones, pagers, Internet/intranet access, web browsers, Notepads, calendars, Personal Digital Assistant (PDA) equipped with Global Positioning System (GPS) receivers;
(4) conventional laptop and/or palmtop receivers;
(5) conventional laptop and/or palmtop transceivers.

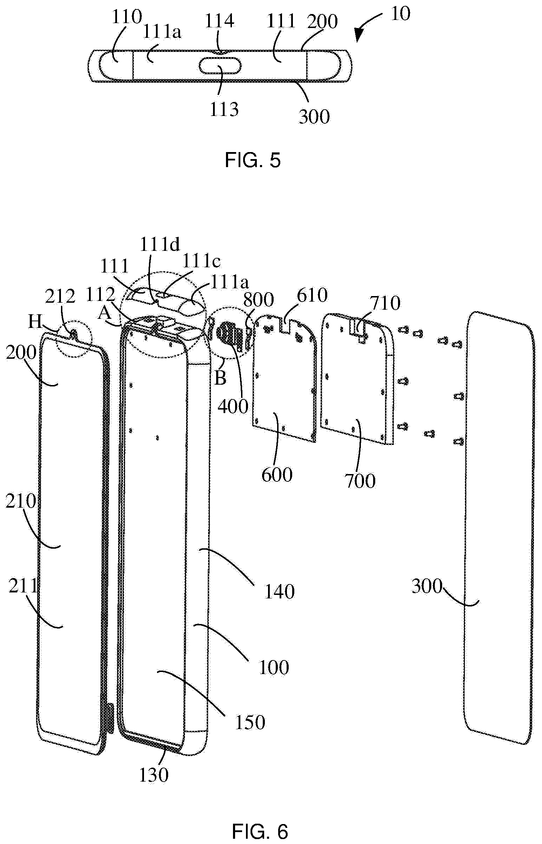

As shown in FIG. 6, in an embodiment, a mobile terminal 10 is provided. The mobile terminal 10 may be a smart phone, a computer or a tablet. The mobile terminal 10 includes a display screen assembly 200, a middle frame 100, a battery cover 300 and a main board 600. The display screen assembly 200 and the battery cover 300 are fixed on both sides of the middle frame 100. The display screen assembly 200, the middle frame 100 and the battery cover 300 together form an outer structure of the mobile terminal 10. The main board 600 is located inside the mobile terminal 10. The main board 600 is integrated with electronic elements such as a controller, a storage unit, a power management unit, a baseband chip. The display screen assembly 200 is used to display pictures or letters, and the main board 600 may control operation of the mobile terminal 10.

As shown in FIG. 6, in an embodiment, the middle frame 100 includes a bezel and a central plate 150. The central plate 150 has a square structure with rounded corners, and the bezel surrounds the central plate 150. Both sides of the bezel and the central plate 150 both form an open box-like mounting space. The display screen assembly 200 is fixed in the mounting space on one side, and the battery cover 300 is fixed in the mounting space on the other side. The main board 600 and a platen 700 are arranged between the central plate 150 and the battery cover 300. The main board 600 and the platen 700 are fixed on a side of the central plate 150 towards the battery cover 300 by screws. It may be understood that when a user normally uses the mobile terminal 10 to answer and make a call, a receiver of the mobile terminal 10 faces the user's ear, a speaker of the mobile terminal 10 faces the user's mouth, and the mobile terminal 10 is nearly perpendicular to the ground. In such a case, an upward end is a top end of the mobile terminal 10, a downward end is a bottom end of the mobile terminal 10, a leftward end is a left end of the mobile terminal 10, and a rightward end is a right end of the mobile terminal 10; a distance between the left end and the right end defines a width of the mobile terminal 10, a distance between the top end and the bottom end defines a length of the mobile terminal 10, and a distance between an outer surface of the display screen assembly 200 and an outer surface of the battery cover 300 defines a thickness of the mobile terminal 10.

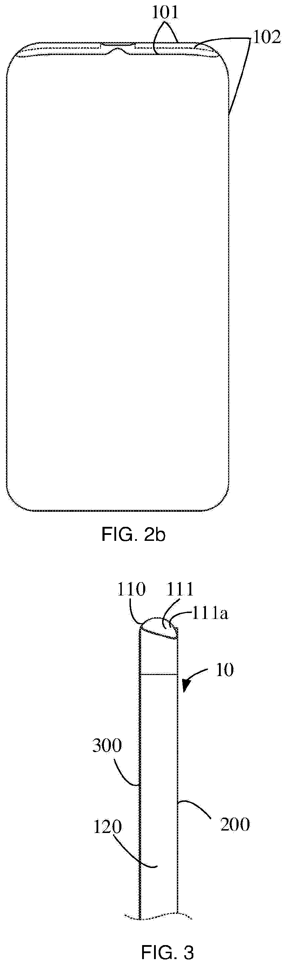

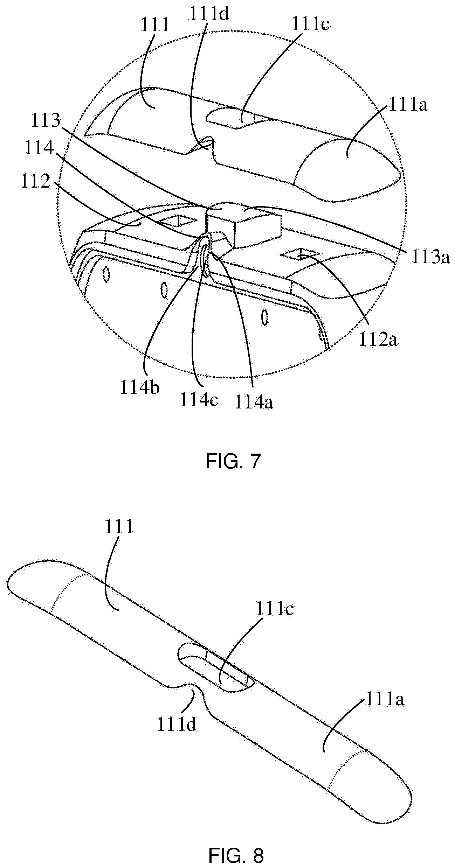

As shown in FIG. 2b and FIGS. 6-11, the display screen assembly 200 includes a display screen 240. The display screen 240 is a rectangle or a rectangle with rounded corners. A plane where the display screen 240 is located is defined as a reference plane. It may be understood that a plane defined by a length direction and a width direction of the middle frame 100 is parallel or coincident with the plane where the display screen 240 is located. The bezel includes a light transmission part 111 and a frame body. The frame body surrounds the central plate 150 and encloses a mounting space together with the central plate 150. The display screen assembly 200 and the battery cover 300 are arranged in two mounting spaces directed away from each other. An edge of an orthographic projection of the light transmission part 111 on the reference plane forms a first edge line 101, and an orthographic projection of the frame body on the reference plane forms a second edge line 102. A region enclosed by the first edge line 101 is partially or completely located on a side of the second edge line 102 away from the display screen 240. The frame body includes a first side frame body 120 and a second side frame body 140 arranged opposite to each other, as well as a bottom frame body 130 and a lining plate 112 both connected between the first side frame body 120 and the second side frame body 140. The bottom frame body 130 and the lining plate 112 are arranged opposite to each other, and a thickness of the lining plate 112 is less than a thickness of the bottom frame body 130. The first side frame body 120 is located at the left end of the mobile terminal 10, the second side frame body 140 is located at the right end of the mobile terminal 10, the lining plate 112 is located at the top end of the mobile terminal 10, and the bottom frame body 130 is located at the bottom end of the mobile terminal 10. In an embodiment, the frame body and the central plate 150 are manufactured by an integrated molding process. The light transmission part 111 covers the lining plate 112, and the light transmission part 111 and the lining plate 112 together form a top frame 110 of the bezel. In an embodiment, the light transmission part 111 is fixed on the lining plate 112 by a dispensing process to complete an appearance structure of the middle frame 100. As shown in FIG. 6 and FIG. 7, the light transmission part 111 has an elongated structure and is arranged along a width direction of the mobile terminal 10. A length of the light transmission part 111 is slightly less than or equal to the width of the mobile terminal 10, and a width of the light transmission part 111 is slightly less than or equal to the thickness of the mobile terminal 10.

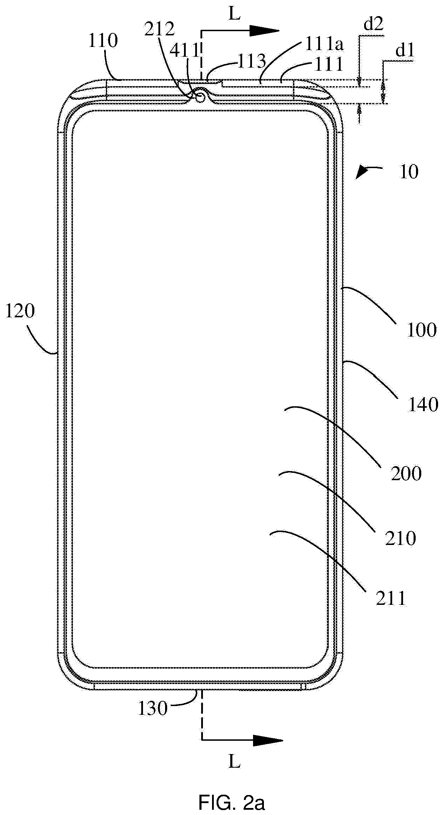

In the present application, the top frame 110 of the bezel is divided into the light transmission part 111 and the opaque lining plate 112, and the light transmission part 111 is made of a light transmitting material and fixed on the lining plate 112 by the dispensing process or other processes to complete the appearance structure of the middle frame 100, thus reducing a visual height at the top frame 110 of the middle frame 100. As shown in FIG. 2a, if the top frame 110 is completely made of an opaque material, the visual height of the top frame 110 is d1, but the structure of the top frame 110 in the present application partially adopts the light transmission part 111 made of the light transmitting material and covering the lining plate 112, so the visual height of the top frame 110 is d2, thus achieving an effect of reducing the visual length of the middle frame 100.

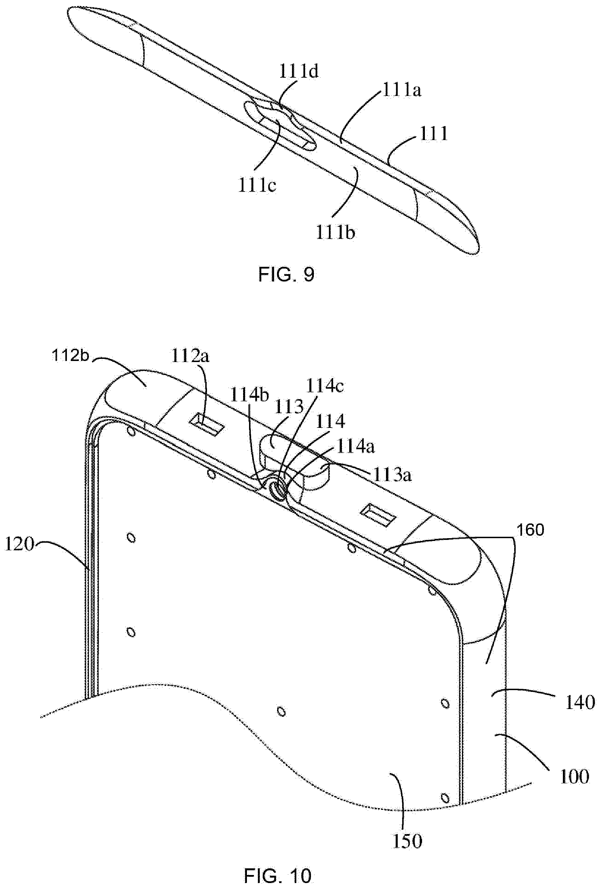

As shown in FIG. 10, in an embodiment, the frame body includes a first outer surface 160 and a first fitting surface 112b connected with each other. The first outer surface 160 is located on a periphery of the first fitting surface 112b, and the first fitting surface 112b is located on a side of the lining plate 112 facing away from the bottom frame body 130. It may be understood that the side of the lining plate 112 facing away from the bottom frame body 130 includes the first fitting surface 112b and a surface surrounding the first fitting surface 112b. A outer surface of the first side frame body 120, an outer surface of the second side frame body 140, an outer surface of the bottom frame body 130 and a part of the lining plate 112 other than the first fitting surface 112b form the first outer surface 160, that is, an outer surface of the frame body, except for the first fitting surface 112b, belongs to the first outer surface 160. That is, there is a distance between the first fitting surface 112b and an inner surface of a side of the lining plate 112 facing the display screen assembly 200, the distance is the thickness of the lining plate 112, and the thickness of the lining plate 112 is less than the thickness of the bottom frame body 130. It may be understood that a sum of the thickness of the lining plate 112 and a thickness of the light transmission part 111 is approximately the same as the thickness of the bottom frame body 130. In an embodiment, the first fitting surface 112b may be a plane; in another embodiment, the first fitting surface 112b may be a curved surface. In an embodiment, a middle part of the first fitting surface 112b is a plane, and two ends thereof are curved surfaces with smooth transition, to avoid convex edges between the first fitting surface 112b and the outer surfaces of the first side frame body 120 and the second side frame body 140.

As shown in FIG. 8 and FIG. 9, in an embodiment, the light transmission part 111 is formed by engaging two curved surfaces, edges of which are connected with each other. The two curved surfaces include a second outer surface 111a and a second fitting surface 111b directed away from each other. An edge of the second outer surface 111a is connected to an edge of the second fitting surface 11 1b. It can be understood that the second outer surface 111a may include one curved surface or plane, or may include a plurality of curved surfaces or planes; the second fitting surface 111b may include one curved surface or plane or may include a plurality of curved surfaces or planes. The first fitting surface 112b and the second fitting surface 111b have the same area and shape. After the light transmission part 111 is fixed on the lining plate 112, the first fitting surface 112b and the second fitting surface 111b are bonded with each other, the second outer surface 111a is smoothly connected to the first outer surface 160, and the light transmission part 111 and the lining plate 112 together form the top frame 110.

As shown in FIG. 10, in an embodiment, the lining plate 112 includes a first receiving block 113 and a second receiving block 114, and the first receiving block 113 and the second receiving block 114 protrude beyond the first fitting surface 112b. The second receiving block 114 is located at an edge of a side of the first fitting surface 112b towards the display screen assembly 200, and the first outer surface 160 on the periphery of the first fitting surface 112b forms a front surface 114a of the second receiving block 114. It may be understood that the front surface 114a of the second receiving block 114 extends along a radian of the first outer surface 160 and visually belongs to a part of the first outer surface 160. The first receiving block 113 is attached to a side of the second receiving block 114 directed away from the front surface 114a. The first receiving block 113 is located between the second receiving block 114 and an edge of a side of the first fitting surface 112b towards the battery cover 300. An inner cavity of the first receiving block 113 is in communication with an inner cavity of the second receiving block 114.

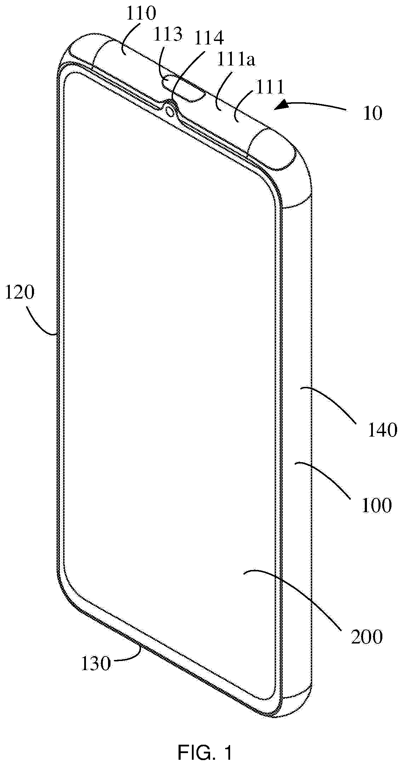

As shown in FIG. 1, FIG. 8 and FIG. 9, in an embodiment, the light transmission part 111 is provided with a through slot 114c cooperating with the first receiving block 113, and the through slot 114c penetrates the second outer surface 111a and the second fitting surface 111b. The light transmission part 111 is provided with a recess 111d cooperating with the second receiving block 114, and the recess 111d penetrates an edge of the second outer surface 111a and an edge of the second fitting surface 111b. When the light transmission part 111 is fixed on the lining plate 112, the first receiving block 113 is arranged in and passes through the through slot 114c, and the first receiving block 113 includes a top surface 113a smoothly connected to the second outer surface 111a; the second receiving block 114 is received in the recess 111d, and the front surface 114a of the second receiving block 114 is smoothly connected to the second outer surface 111a. The top surface 113a and the front surface 114a are both smoothly connected to the second outer surface 111a, so that the outer surface of the top frame 110 presents a smoothly connected curved surface, avoiding convex edges that would degrade the appearance of the mobile terminal 10.

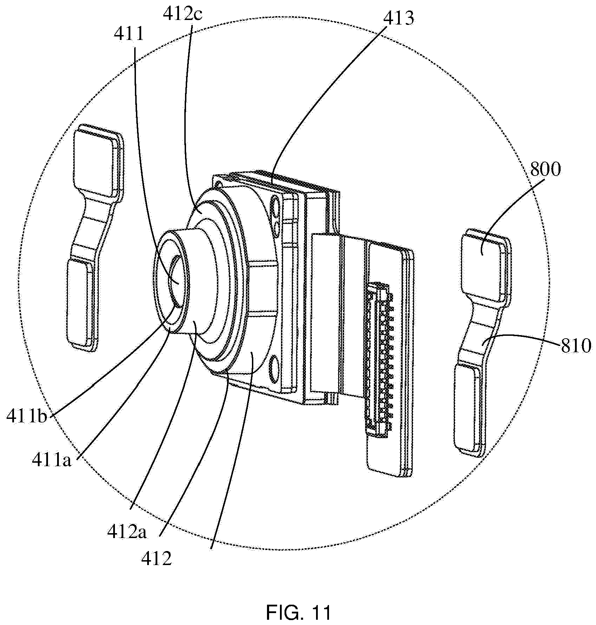

As shown in FIG. 6 and FIG. 11, in an embodiment, the mobile terminal 10 includes a camera module 400, and the camera module 400 includes a lens barrel 412, a base 413, a flexible circuit board and other components. The flexible circuit board is connected to the base 413. An image processor, an AF driving component, an infrared filter, a memory and other elements are arranged in the base 413, to realize imaging of external objects. The lens barrel 412 is connected to the base 413, and an inner cavity of the lens barrel 412 is in communication with an inner cavity of the base 413. Alight entrance lens 411 and other optical lenses are arranged in the lens barrel 412. An end of the lens barrel 412 away from the base 413 is an end wall 411a, a light entrance opening 411b is arranged in the end wall 411a, and the light entrance lens 411 is exposed through the light entrance opening 411b.

As shown in FIG. 11, in another embodiment, the lens barrel 412 includes a first boss 412a and a second boss 412b connected to each other. The second boss 412b is connected between the first boss 412a and the base 413, the second boss 412b includes a step surface, and the step surface surrounds the first boss 412a. The end wall 411a is located on a side of the first boss 412a away from the base 413. The light entrance lens 411 is mounted in the first boss 412a and exposed through the light entrance opening 411b in the end wall 411a.

As shown in FIGS. 10, 13 and 14, in an embodiment, the camera module 400 is located in the mobile terminal 10, at least a portion of the structure of the base 413 is located in the first receiving block 113, and at least a portion of the structure of the lens barrel 412 is located in the second receiving block 114. It may be understood that when the first receiving block 113 and the second receiving block 114 are large, the base 413 may be completely located in the first receiving block 113, and the lens barrel 412 may be completely located in the second receiving block 114; when the first receiving block 113 and the second receiving block 114 are small, the base 413 may be partially located in the first receiving block 113, and the lens barrel 412 may be partially located in the second receiving block 114. The base 413 may be completely or partially received in the first receiving block 113, and the lens barrel 412 may be completely or partially received in the second receiving block 114, according to actual needs. A groove 114b is arranged in the second receiving block 114 and penetrates the front surface 114a. A first through hole 114c is arranged in the second receiving block 114 and penetrates through a groove bottom of the groove 114b. The light entrance lens 411 is exposed through the first through hole 114c. An orientation of the light entrance lens 411 is the same as an orientation of the display screen assembly 200. Ambient light may irradiate to the light entrance lens 411 through the first through hole 114c, so that the mobile terminal 10 can take photos, make videos or record by a front camera.

In an embodiment, the display screen assembly 200 uses a LCD (Liquid Crystal Display) screen to display information, and the LCD screen may be a TFT (Thin Film Transistor) display screen 240 or an IPS (In-Plane Switching) display screen 240 or a SLCD (Split Liquid Crystal Display) display screen 240. In another embodiment, the display screen assembly 200 uses an OLED (Organic Light emitting Diode) screen to display information, and the OLED screen may be an AMOLED (Active Matrix Organic Light Emitting Diode) display screen 240 or a Super AMOLED (Super Active Matrix Organic Light emitting diode) display screen 240 or a Super AMOLED Plus (Super Active Matrix Organic Light Emitting Diode Plus, Magic Screen) display screen 240. It may be understood that the display screen assembly 200 is preferably an OLED screen, which is thin and is conducive to reducing the thickness of the mobile terminal 10. Under the control of a controller, the display screen assembly 200 may display information and provide an operation interface for the user.

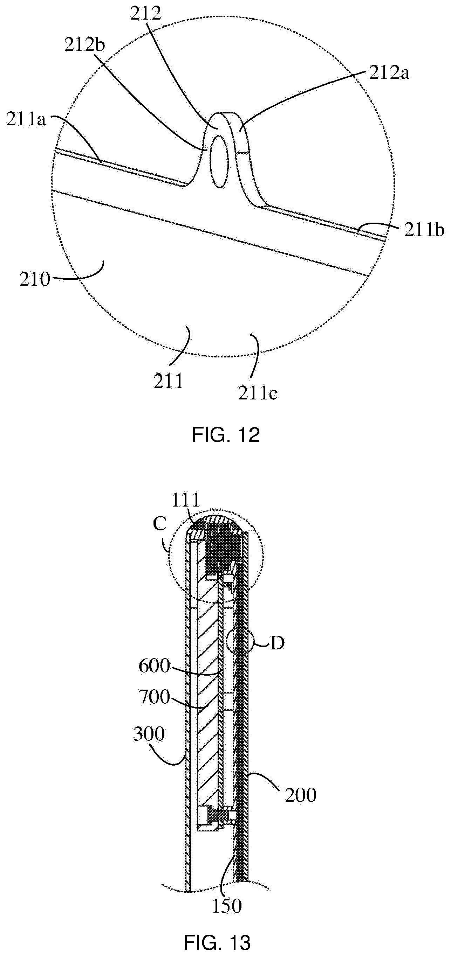

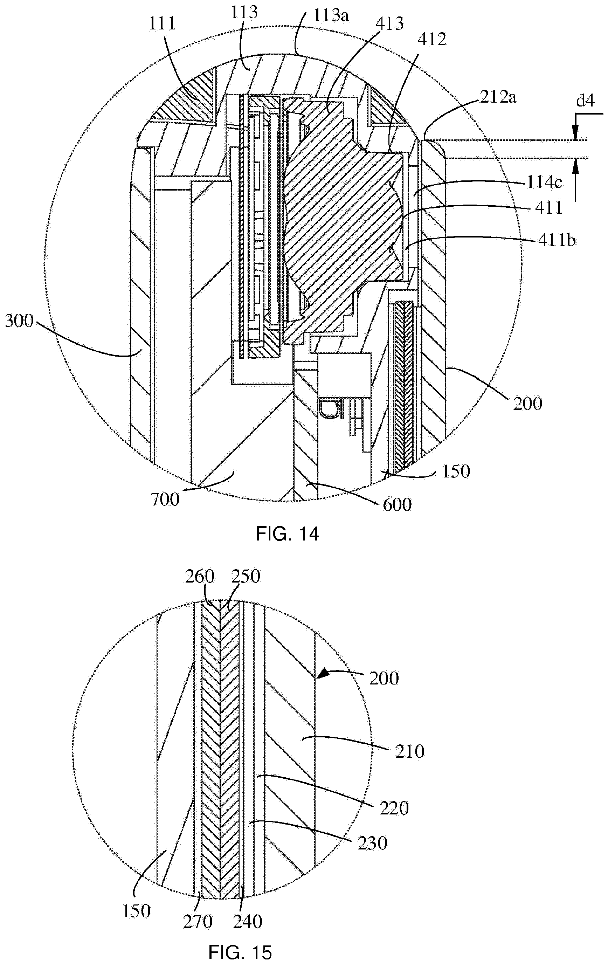

As shown in FIG. 13 and FIG. 15, in an embodiment, the display screen assembly 200 includes a cover plate 210, a first optical adhesive layer 220, a polarizer 230, the display screen 240, a second optical adhesive layer 250, foam 260, and a heat sink 270 arranged in sequence. The cover plate 210 is made of transparent glass, with light transmittance of not less than 80%, and a thickness of the cover plate 210 is less than or equal to 0.55 mm. The first optical adhesive layer 220 is made of an OCA transparent adhesive and used to bond the cover plate 210 and the polarizer 230, and a thickness of the first optical adhesive layer 220 is less than or equal to 0.15 mm. The polarizer 230 is located between the first optical adhesive layer 220 and the display screen 240, and a thickness of the polarizer is less than or equal to 0.147 mm. A thickness of the display screen 240 is less than or equal to 0.03 mm and can display images. The second optical adhesive layer 250 is also made of an OCA transparent adhesive and used to bond the display screen 240 and the foam 260, and a thickness of the second optical adhesive layer 250 is less than or equal to 0.088 mm. The Foam 260 is located on a side of the second optical adhesive layer 250 facing away from the display screen 240 and has sealing and damping functions, and a thickness of the foam 260 is less than or equal to 0.239 mm. The heat sink 270 is arranged on a side of the foam 260 facing away from the second optical adhesive layer 250, which is convenient for heat dissipation of the display screen 240, and a thickness of the heat sink 270 is less than or equal to 0.03 mm.

As shown in FIG. 6, in an embodiment, the cover plate 210 includes a substrate 211 and a bump 212 connected with each other. The substrate 211 covers the display screen 240. The bump 212 protrudes from an edge of the substrate 211 and is located in a middle position of the edge, and may cooperate with the groove 114b to be received in the groove 114b. It may be understood that the bump 212 protruding from the edge of the substrate 211 can be explained as follows: when the substrate 211 and the bump 212 are projected orthographically to the reference plane, an edge of an orthographic projection of an end of the substrate 211 on the reference plane forms a curve, in which the end of the substrate 211 is at the same side as the bump 212, and the curve includes two line segments on both sides of the bump 212, and when the two line segments are connected to form a reference line, the substrate 211 is located on one side of the reference line and the bump 212 is located on the other side of the reference line.

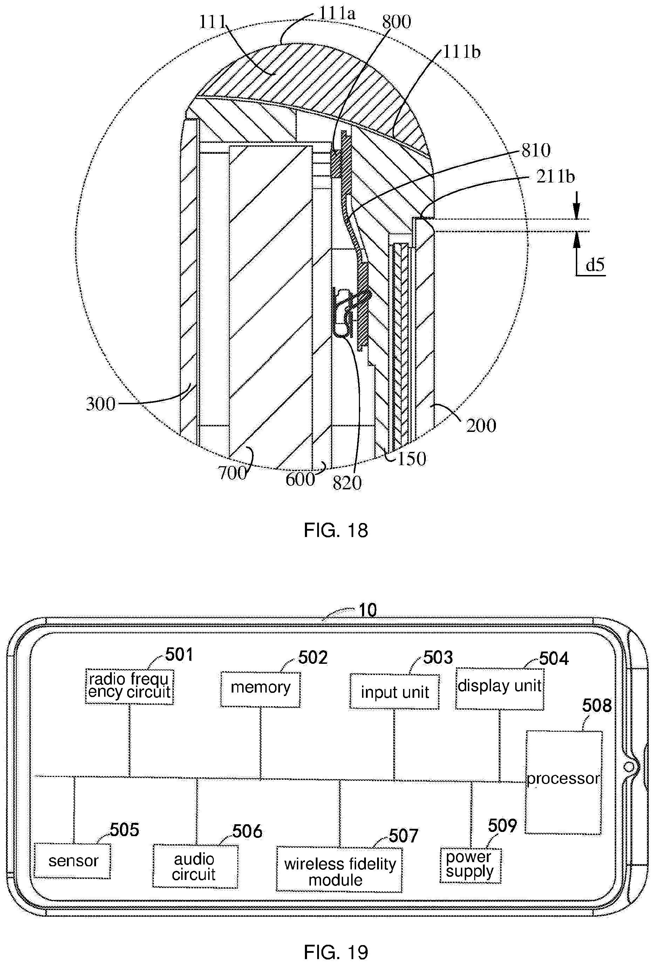

As shown in FIG. 12, in an embodiment, the bump 212 includes a first side surface 212a and a third outer surface 212b. The first side surface 212a and the third outer surface 212b meet to form a right angle, to avoid a smooth transition arc on the top of the bump 212 and to reduce a dimension of the bump 212 in a length direction of the mobile terminal 10. Thus, a distance between an optical axis of the camera module and the top end of the mobile terminal 10 can be reduced, and the height of the top frame 110 can be reduced. The substrate 211 includes a second side surface 211a, a third side surface 211b and a fourth outer surface 211c. The first side surface 212a connects the second side surface 211a and the third side surface 211b. The fourth outer surface 211c is coplanar with the third outer surface 212b. The second side surface 211a and the fourth outer surface 211c meet to form a right angle, while the third side surface 211b and the fourth outer surface 211c meet to form a right angle. In another embodiment, as shown in FIGS. 12 and 18, a 2.5D screen may be made between the second side surface 211a and the fourth outer surface 211c to realize smooth transition, or a beveled chamfer may be made between the second side surface 211a and the fourth outer surface 211c to realize smooth transition.

As shown in FIGS. 14 and 18, in still another embodiment, a width of a chamfer between the first side surface 212a and the third outer surface 212b is 0.1 mm ~ 0.15 mm, and a width of a chamfer between the third side surface 211b and the fourth outer surface 211c is 0.1 mm ~ 0.15 mm. It may be understood that a distance d5 between a position of the fourth outer surface 211c where the chamfer starts and a plane where the third side surface 211b is located is 0.1 mm - 0.15 mm, and a width of a chamfer between the second side surface and the fourth outer surface 211c is equal to d5, i.e., 0.1 mm - 0.15 mm.

In another embodiment, the second side surface 211a and the third side surface 211b are located on the bump 212, and a maximum width of the bump 212 is equal to a width of the substrate 211, and the bump 212 is connected to the substrate 211 at the maximum width of the bump 212. The first side surface 212a is connected between the second side surface 211a and the third side surface 211b, the second side surface 211a and the third side surface 211b are arranged facing away from each other, and the first side surface 212a is located at a tail end of the bump 212 away from the substrate 211. The first side surface 212a and the third outer surface 212b meet to form a right angle.

As shown in FIG. 13 and FIG. 14, in an embodiment, there is a gap between the display screen 240 and the lens barrel 412 in a length direction of the electronic device. It may be understood that a top end of the display screen 240 is lower than the lens barrel 412, so that there is a gap between a top width of the display screen 240 and the lens barrel 412.

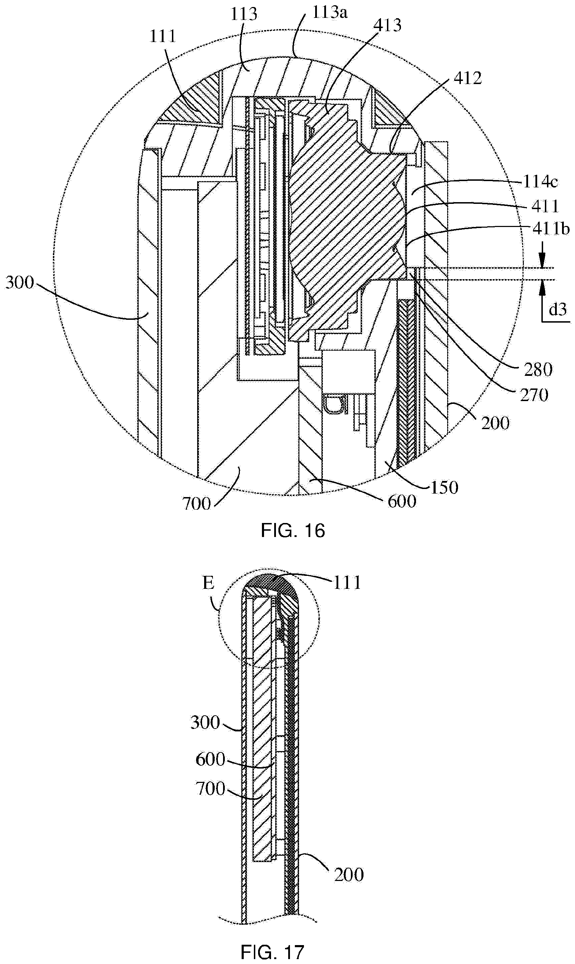

As shown in FIG. 16, in another embodiment, an edge of the display screen 240 overlaps with the end wall 411a, which can be understood in such a way that a partial edge of a projection of the display screen 240 on the cover plate 210 is within a projection of an edge of the end wall 411a on the cover plate 210. A width d3 of a region where the edge of the display screen 240 overlaps with the end wall 411a is 0.1 mm ~ 0.2 mm. The display screen assembly 200 includes a display region and a black-bordered region enclosing the display region. It may be understood that a size of the black-bordered region may be reduced by overlapping the display screen 240 with the end wall 411a.

As shown in FIG. 16, in an embodiment, a seal 280 is arranged between the display screen 240 and the end wall 411a, one side of the seal 280 is attached to the end wall 411a, and the other side of the seal 280 opposite to the one side is attached to the display screen 240, which may prevent dust and water vapor from entering an interior of the mobile terminal 10, and have an effect of shock absorption, that is, impact on the display screen 240 can be reduced and damage to the display screen 240 can be avoided when the mobile terminal 10 is hit. In an embodiment, the seal 280 is a ring seal and may be made of the foam 260.

As shown in FIG. 6, in an embodiment, the main board 600 is provided with a notch 610, and the camera module 400 is arranged in and passes through the notch 610. This structure may avoid stacking the camera module 400 on the main board 600, which is conducive to reducing an overall thickness of the mobile terminal 10 and facilitates thinning of the mobile terminal 10. In another embodiment, the platen 700 is located on a side of the main board 600 toward the battery cover 300, and the platen 700 together with the main board 600 is fixed to the central plate 150 by screws. An accommodation groove 710 is arranged in the platen 700, and a partial structure of the camera module 400 is received in the accommodation groove 710. The platen 700 presses the camera module 400 to secure the camera module 400. It may be understood that the platen 700 is not necessary, and the camera module 400 may also be reliably positioned by other ways, which will not be specifically limited here.

As shown in FIGS. 6, 10, 17 and 18, in an embodiment, a light emitting element 800 is arranged in the mobile terminal 10, and the light emitting element 800 is located between the central plate 150 and the main board 600. In an embodiment, the light emitting element 800 is an LED lamp. As shown in FIGS. 17 and 18, the light emitting element 800 is electrically connected to the main board 600 through a flexible circuit board 810 and an elastic sheet 820. As shown in FIG. 6 and FIG. 10, a second through hole 112a is arranged in the lining plate 112 and penetrates the first fitting surface 112b, and light emitted by the light emitting element 800 illuminates the light transmission part 111 through the second through hole 112a. In an embodiment, there are two light emitting elements 800 symmetrically arranged on both sides of the camera module 400, and there are two second through holes 112a symmetrically arranged on both sides of the first receiving block 113. After the main board 600 controls the light emitting element 800 to emit light, the light emitting element 800 may uniformly illuminate the light transmission part 111, so that the mobile terminal 10 has a lighting effect, improving the appearance of the whole device.

In an embodiment, the mobile terminal 10 is assembled in the following order: fixing the light transmission part to the lining plate 112 by the dispensing process; fixing the display screen assembly 200 to the middle frame 100 by the dispensing process; mounting the camera module 400 to the middle frame 100; positioning a length direction and a width direction of the camera module 400 through the middle frame 100; exposing the light entrance lens 411 through the first through hole 114c; mounting the light emitting element 800 to the middle frame 100 through the flexible circuit board 810; arranging the two light emitting elements 800 on both sides of the camera module 400; connecting the flexible circuit board 810 to the main board 600 through the elastic sheet 820; mounting the main board 600 to the middle frame 100; snapping a BTB connector of camera module 400 to the main board 600; mounting the platen 700 to the middle frame 100 by screws and positioning the platen 700 on a side of the main board 600 away from the central plate 150; pressing the camera module 400 by the platen 700; and fastening the battery cover 300.

With the promotion of full-screen mobile terminals 10, the camera module 400 gradually approaches a top end of the middle frame 100, and a distance between the cover plate 210 and the top end of the middle frame 100 increases, which causes a great visual height of the top frame 110 and affects the aesthetics. In this application, the top frame 110 is divided into the light transmission part 111 and the lining plate 112, and the light transmission part 111 is fixed to the lining plate 112 by the dispensing process or other processes, reducing the visual height of the top frame 110. Moreover, the light transmission part 111 is illuminated by the light emitting element 800, so that the mobile terminal 10 has the lighting effect and the appearance of the mobile terminal 10 can be improved.

Referring to FIG. 19, FIG. 19 is a schematic view of the mobile terminal 10 according to an embodiment of the present application. The mobile terminal 10 may include a radio frequency circuit 501, a memory 502 including one or more computer readable storage media, an input unit 503, a display unit 504, a sensor 505, an audio circuit 506, a wireless fidelity (Wi-Fi) module 507, a processor 508 including one or more processing cores, a power supply 509 and other components. It can be understood by those skilled in the art that the structure of the mobile terminal 10 shown in FIG. 19 does not constitute limitation on the mobile terminal 10, and instead may include more or less components than those shown in the drawing, or combine some components, or employ a different arrangement of the components.

The radio frequency circuit 501 may be used to send and receive information, or to send and receive signals during a call. In particular, after receiving downlink information from a base station, the radio frequency circuit 501 may transmit the information to one or more processors 508 for processing; in addition, the radio frequency circuit 501 may be used to transmit uplink data to the base station. In general, the radio frequency circuit 501 includes but is not limited to an antenna, at least one amplifier, a tuner, one or more oscillators, a SIM (Subscriber Identity Module) card, a transceiver, a coupler, a LNA (Low Noise Amplifier), a duplexer and the like. In addition, the radio frequency circuit 501 may also communicate with networks and other devices through wireless communication. The wireless communication may adopt any communication standard or protocol, including but not limited to GSM (Global System of Mobile) communication, GPRS (General Packet Radio Service), CDMA (Code Division Multiple Access), WCDMA (Wideband Code Division Multiple Access), LTE (Long Term Evolution), e-mail, SMS (Short Messaging Service) and so on.

The memory 502 may be used to store applications and data. The applications stored in the memory 502 contain executable codes. The applications may form various functional modules. The processor 508 performs various functional applications and data processing by running the applications stored in the memory 502. The memory 502 may mainly include a program storage area and a data storage area, in which the program storage area may store an operating system, applications required by at least one function (such as a sound playing function, an image playing function, etc.); the data storage area may store data (such as audio data, phonebook data, etc.) created according to the use of the mobile terminal 10. In addition, the memory 502 may include a high speed random access memory, and may also include a nonvolatile memory, such as at least one disk memory, a flash memory device, or other volatile solid state storage devices. Accordingly, the memory 502 may also include a memory controller to provide access to the memory 502 by the processor 508 and the input unit 503.

The input unit 503 may be used to receive numeral information, character information or user characteristic information (such as fingerprints), and generate keyboard, mouse, joystick, optical or trackball signal inputs related to user settings and function control. Specifically, in a specific embodiment, the input unit 503 may include a touch sensitive surface and other input devices. The touch sensitive surface, also called a touch display screen or a touch panel, may collect a touch operation of the user on or near the touch sensitive surface (such as an operation of the user on or near the touch sensitive surface by using any suitable object or accessory such as a finger, a stylus, etc.) and drive a corresponding connected device according to a preset program. Optionally, the touch sensitive surface may include two parts: a touch detection device and a touch controller. The touch detection device detects a touch orientation of the user and a signal brought by the touch operation, and transmits the signal to the touch controller; the touch controller receives touch information from the touch detection device and converts it into contact coordinates, and then transmits the coordinates to the processor 508; and the touch controller may receive and execute a command from the processor 508.

The display unit 504 may be used to display information input by the user or information provided to the user, and various graphical user interfaces of the mobile terminal 10. These graphical user interfaces may include graphics, text, icons, videos and any combination thereof. The display unit 504 may include a display panel. Optionally, the display panel may be configured in the form of LCD (Liquid Crystal Display), OLED (Organic Light-Emitting Diode) and so on. Further, the touch sensitive surface may cover the display panel. After detecting a touch operation on or near it, the touch sensitive surface transmits it to the processor 508 to determine the type of the touch event, and then the processor 508 provides corresponding visual output on the display panel according to the type of touch event. Although the touch sensitive surface and the display panel in FIG. 19 are used as two independent components to realize the input and output functions, the touch sensitive surface and the display panel in some embodiments may be integrated to realize the input and output functions. It may be understood that the display screen may include the input unit 503 and the display unit 504.

The mobile terminal 10 may also include at least one sensor 505, such as a light sensor, a motion sensor and other sensors. Specifically, the light sensor may include an ambient light sensor and a proximity sensor, in which the ambient light sensor may adjust the brightness of the display panel according to the light and shade of the ambient light. The proximity sensor may turn off the display panel and/or backlight when the mobile terminal 10 is moved to the user's ear. As a kind of motion sensor, the gravity acceleration sensor may detect the magnitude of acceleration in various directions (generally three axes). The gravity acceleration sensor may detect the magnitude and direction of gravity when stationary, which can be used for applications that identify a posture of a mobile phone (such as switching between a horizontal screen and a vertical screen, related games, magnetometer posture calibration), and functions related to vibration recognition (such as a pedometer, tapping). The mobile terminal 10 may be also equipped with a gyroscope, a barometer, a hygrometer, a thermometer, an infrared sensor and other sensors, which will not be described here.

The audio circuit 506 may provide an audio interface between the user and the mobile terminal 10 through a speaker and a microphone. The audio circuit 506 may convert received audio data into an electrical signal and transmit it to the speaker which in turn converts it into a sound signal for output. The microphone converts the collected sound signal into an electrical signal which is received by the audio circuit 506 and converted into audio data. The audio data is output to and processed by the processor 508, and then transmitted to for example another mobile terminal 10 through the radio frequency circuit 501, or outputted to the memory 502 for further processing. The audio circuit 506 may also include a headset jack to provide communication between a peripheral headset and the mobile terminal 10.

Wireless fidelity (Wi-Fi) belongs to a short-range wireless transmission technology. The mobile terminal 10 can help the user to send and receive e-mails, browse web pages and access streaming media through the wireless fidelity module 507, which provides the user with wireless broadband Internet access. Although FIG. 19 shows the wireless fidelity module 507, it may be understood that the wireless fidelity module is not a necessary component of the mobile terminal 10 and may be omitted as needed without changing the scope of the present disclosure.

The processor 508 is the control center of the mobile terminal 10, and sometimes may also be referred to as a main controller. The processor 508 connects various parts of the whole mobile terminal 10 by various interfaces and lines. The processor 508 performs various functions of the mobile terminal 10 and processes data by running or executing applications stored in the memory 502 and by calling data stored in the memory 502. Thus, the mobile terminal 10 can be monitored overall. Optionally, the processor 508 may include one or more processing cores; preferably, the processor 508 may integrate an application processor and a modem processor, in which the application processor mainly handle operating systems, user interfaces and applications, and the modem processor mainly handle the wireless communication. It may be understood that the above modem processor may also not be integrated into the processor 508.

The mobile terminal 10 also includes the power supply 509 that supplies power to various components. Preferably, the power supply 509 may be logically connected to the processor 508 through a power supply management system. Thus, the management of charging, discharging, and power consumption management and other functions may be realized through the power supply management system. The power supply 509 may also include one or more DC or AC power sources, a re-charging system, a power failure detection circuit, a power converter or inverter, a power status indicator and other components.

Although not shown in FIG. 19, the mobile terminal 10 may also include a Bluetooth module, which will not be described here. In a specific implementation, the above various modules may be implemented as independent entities, or may be combined freely and implemented as one entity or several entities. The specific implementation of the above various modules can refer to the previous method embodiments, and thus will not be described here. The various technical features of the above embodiments may be combined freely. For the conciseness of the description, all possible combinations of various technical features in the above embodiments are not described.

The above embodiments only describe several implementations of the present application. The description is specific and detailed, but shall not be understood as limitation on the scope of the present disclosure. The protection scope of the application shall be subject to the appended claims.

## Claims

1. A mobile terminal (10), comprising:
a display screen assembly (200); and
a middle frame (100), comprising a frame body and a light transmission part (111) located on top of the frame body,
wherein the frame body comprises a bottom frame body (130) and a lining plate (112) arranged opposite to each other, and the light transmission part (111) covers the lining plate (112),
wherein the lining plate (112) comprises a second receiving block (114), the light transmission part (111) comprises a recess (111d), and the second receiving block (114) protrudes beyond a side of the lining plate (112) facing away from the bottom frame body (130) and is received in the recess (111d).

2. The mobile terminal (10) according to claim 1, wherein a thickness of the lining plate (112) is less than a thickness of the bottom frame body (130).

3. The mobile terminal (10) according to claim 2, wherein the frame body comprises a first outer surface (160) and a first fitting surface (112b) connected with each other, the first fitting surface (112b) is located on the side of the lining plate (112) facing away from the bottom frame body (130), and the first outer surface (160) is located on a periphery of the first fitting surface (112b); wherein the light transmission part (111) comprises a second outer surface (111a) and a second fitting surface (1 1 1b) directed away from each other, and an edge of the second outer surface (111a) is connected to an edge of the second fitting surface (111b); and wherein the first fitting surface (112b) and the second fitting surface (111b) are bonded with each other.

4. The mobile terminal (10) according to claim 3, wherein the second outer surface (111a) is smoothly connected to the first outer surface (160).

5. The mobile terminal (10) according to claim 3, wherein the lining plate (112) comprises a first receiving block (113) protruding beyond the first fitting surface (112b); the second receiving block (114) is closer to the display screen assembly (200) than the first receiving block (113); and an inner cavity of the first receiving block (113) is in communication with an inner cavity of the second receiving block (114).

6. The mobile terminal (10) according to claim 5, wherein the first receiving block (113) comprises a top surface (113a); a through slot (114c) is arranged in the light transmission part (111) and cooperates with the first receiving block (113), and the through slot (114c) penetrates the second outer surface (111a) and the second fitting surface (111b); the first receiving block (113) is arranged in and passes through the through slot (114c); and the top surface (113a) is smoothly connected to the second outer surface (111a).

7. The mobile terminal (10) according to claim 3, wherein the recess (111d) is located on a side of the light transmission part (111) towards the display screen assembly (200), and penetrates an edge of the second outer surface (111a) and an edge of the second fitting surface (111b);
the second receiving block (114) is located at an edge of a side of the first fitting surface (112b) towards the display screen assembly (200), and a part of the first outer surface (160) forms a front surface (114a) of the second receiving block (114), and the front surface (114a) is smoothly connected to the second outer surface (111a).

8. The mobile terminal (10) according to claim 7, wherein the mobile terminal (10) comprises a camera module (400), and the camera module (400) comprises:
a base (413) having a partial structure received in the first receiving block (113);
a lens barrel (412) connected to the base (413) and having a partial structure received in the second receiving block (114); and
a flexible circuit board connected to the base (413).

9. The mobile terminal (10) according to claim 8, wherein the camera module (400) comprises a light entrance lens (411) exposed outside the lens barrel (412); a groove (114b) is arranged in the second receiving block (114) and penetrates the front surface (114a); a first through hole (114c) is arranged in the second receiving block (114) and penetrates a groove bottom of the groove (114b); and the light entrance lens (411) is exposed through the first through hole (114c).

10. The mobile terminal (10) according to claim 1, comprising a battery cover (300), wherein the battery cover (300) and the display screen assembly (200) are located on both sides of the frame body, and wherein the display screen assembly (200) comprises a cover plate (210), a first optical adhesive layer (220), a polarizer (230), a display screen (240), a second optical adhesive layer (250), foam (260) and a heat sink (270) arranged sequentially in a direction toward the battery cover (300), wherein the display screen (240) is a rectangle or a rectangle with rounded corners.

11. The mobile terminal (10) according to claim 10, wherein the cover plate (210) comprises a substrate (211) and a bump (212) connected with each other, and the bump (212) protrudes from an edge of the substrate (211); and wherein the substrate (211) covers the display screen (240), and the bump (212) is received in the groove (114b).

12. The mobile terminal (10) according to claim 11, wherein the bump (212) has a third outer surface (212b) facing away from the light entrance lens (411), and the bump (212) comprises a first side surface (212a), a second side surface (211a) and a third side surface (211b), wherein the first side surface (212a) is connected between the second side surface (211a) and the third side surface (211b), the second side surface (211a) and the third side surface (211b) are arranged opposite to each other, and the first side surface (212a) is located at a tail end of the bump (212) away from the substrate (211); and wherein the first side surface (212a) and the third outer surface (212b) meet to form a right angle.

13. The mobile terminal (10) according to claim 11, wherein the bump (212) has a third outer surface (212b) facing away from the light entrance lens (411), and the bump (212) comprises a first side surface (212a) located at a tail end of the bump (212) away from the substrate (211), wherein a width of a chamfer between the first side surface (212a) and the third outer surface (212b) is 0.1 mm ~ 0.15 mm; and wherein the substrate (211) comprises a second side surface (211a), a third side surface (211b) and a fourth outer surface (211c), the first side surface (212a) connects the second side surface (211a) and the third side surface (211b), and the fourth outer surface (211c) is coplanar with the third outer surface (212b), wherein a width of a chamfer between the second side surface (211a) and the fourth outer surface (211c) is 0.1 mm - 0.15 mm, and a width of a chamfer between the third side surface (211b) and the third outer surface (212b) is 0.1 mm - 0.15 mm.

14. The mobile terminal (10) according to claim 11, wherein the bump (212) has a third outer surface (212b) facing away from the light entrance lens (411), and the bump (212) comprises a first side surface (212a) located at a tail end of the bump (212) away from the substrate (211), wherein the first side surface (212a) and the third outer surface (212b) meet to form a right angle; and wherein the substrate (211) comprises a second side surface (211a), a third side surface (211b) and a fourth outer surface (211c), the first side surface (212a) connects the second side surface (211a) and the third side surface (211b), and the fourth outer surface (211c) is coplanar with the third outer surface (212b), wherein the second side surface (211a) is smoothly transitioned to the fourth outer surface (211c), and the third side surface (211b) is smoothly transitioned to the fourth outer surface (211c).

## Patentansprüche

1. Mobiles Endgerät (10), Folgendes umfassend:
eine Anzeigebildschirmanordnung (200) und
einen Mittelrahmen (100), der einen Rahmenhauptteil und einen Lichtübertragungsteil (111) umfasst, der sich an der Oberseite des Rahmenhauptteils befindet,
wobei der Rahmenhauptteil einen unteren Rahmenhauptteil (130) und eine Auskleidungsplatte (112) umfasst, die einander gegenüber angeordnet sind, und der Lichtübertragungsteil (111) die Auskleidungsplatte (112) bedeckt,
wobei die Auskleidungsplatte (112) einen zweiten Aufnahmeblock (114) umfasst, der Lichtübertragungsteil (111) eine Vertiefung (llld) umfasst und der zweite Aufnahmeblock (114) über eine Seite der Auskleidungsplatte (112) hinausragt, die von dem unteren Rahmenhauptteil (130) weg weist und in der Vertiefung (llld) aufgenommen ist.

2. Mobiles Endgerät (10) nach Anspruch 1, wobei eine Dicke der Auskleidungsplatte (112) kleiner als eine Dicke des unteren Rahmenhauptteils (130) ist.

3. Mobiles Endgerät (10) nach Anspruch 2, wobei der Rahmenhauptteil eine erste Außenfläche (160) und eine erste Passfläche (112b) umfasst, die miteinander verbunden sind, wobei sich die erste Passfläche (112b) an der Seite der Auskleidungsplatte (112) befindet, von dem unteren Rahmenhauptteil (130) weg weisend, und sich die erste Außenfläche (160) an einem Außenrand der ersten Passfläche (112b) befindet, wobei der Lichtübertragungsteil (111) eine zweite Außenfläche (111a) und eine zweite Passfläche (111b) umfasst, die voneinander abgewandt sind, und ein Rand der zweiten Außenfläche (111a) mit einem Rand der zweiten Passfläche (111b) verbunden ist, und wobei die erste Passfläche (112b) und die zweite Passfläche (111b) miteinander verbunden sind.

4. Mobiles Endgerät (10) nach Anspruch 3, wobei die zweite Außenfläche (111a) nahtlos mit der ersten Außenfläche (160) verbunden ist.

5. Mobiles Endgerät (10) nach Anspruch 3, wobei die Auskleidungsplatte (112) einen ersten Aufnahmeblock (113) umfasst, der über die erste Passfläche (112b) hinausragt, der zweite Aufnahmeblock (114) näher zu der Anzeigebildschirmanordnung (200) liegt als der erste Aufnahmeblock (113) und ein innerer Hohlraum des ersten Aufnahmeblocks (113) in Kommunikation mit einem inneren Hohlraum des zweiten Aufnahmeblocks (114) steht.

6. Mobiles Endgerät (10) nach Anspruch 5, wobei der erste Aufnahmeblock (113) eine Oberseite (113a) umfasst, in dem Lichtübertragungsteil (111) ein Durchgangsschlitz (114c) angeordnet ist und mit dem ersten Aufnahmeblock (113) zusammenwirkt und der Durchgangsschlitz (114c) die zweite Außenfläche (111a) und die zweite Passfläche (111b) durchdringt, der erste Aufnahmeblock (113) in dem Durchgangsschlitz (114c) angeordnet ist und durch diesen verläuft und die Oberseite (113a) nahtlos mit der zweiten Außenfläche (111a) verbunden ist.

7. Mobiles Endgerät (10) nach Anspruch 3, wobei sich die Vertiefung (llld) an einer Seite des Lichtübertragungsteils (111) befindet, die hin zur Anzeigebildschirmanordnung (200) zeigt, und einen Rand der zweiten Außenfläche (111a) und einen Rand der zweiten Passfläche (111b) durchdringt,
sich der zweite Aufnahmeblock (114) an einem Rand einer Seite der ersten Passfläche (112b) hin zu der Anzeigebildschirmanordnung (200) befindet, und ein Teil der ersten Außenfläche (160) eine Vorderseite (114a) des zweiten Aufnahmeblocks (114) bildet und die Vorderseite (114a) nahtlos mit der zweiten Außenfläche (111a) verbunden ist.

8. Mobiles Endgerät (10) nach Anspruch 7, wobei das mobile Endgerät (10) ein Kameramodul (400) umfasst und das Kameramodul (400) Folgendes umfasst:
einen Sockel (413), der eine Teilstruktur aufweist, die in dem ersten Aufnahmeblock (113) aufgenommen ist,
einen Objektivtubus (412), der mit dem Sockel (413) verbunden ist und eine Teilstruktur aufweist, die in dem zweiten Aufnahmeblock (114) aufgenommen ist, und
eine flexible Leiterplatte, die mit dem Sockel (413) verbunden ist.

9. Mobiles Endgerät (10) nach Anspruch 8, wobei das Kameramodul (400) eine Lichteingangslinse (411) umfasst, die zur Außenseite des Objektivtubus (412) freiliegt, in dem zweiten Aufnahmeblock (114) eine Rille (114b) angeordnet ist, welche die Vorderseite (114a) durchdringt, in dem zweiten Aufnahmeblock (114) eine erste Durchgangsöffnung (114c) angeordnet ist, die einen Rillenboden der Rille (114b) durchdringt, und die Lichteingangslinse (411) durch die erste Durchgangsöffnung (114c) hindurch freiliegt.

10. Mobiles Endgerät (10) nach Anspruch 1, eine Batterieabdeckung (300) umfassend, wobei sich die Batterieabdeckung (300) und die Anzeigebildschirmanordnung (200) an beiden Seiten des Rahmenhauptteils befinden und wobei die Anzeigebildschirmanordnung (200) eine Deckplatte (210), eine erste optische Haftstoffschicht (220), einen Polarisator (230), einen Anzeigebildschirm (240), eine zweite optische Haftstoffschicht (250), Schaumstoff (260) und einen Kühlkörper (270) umfasst, die nacheinander in einer Richtung hin zu der Batterieabdeckung (300) angeordnet sind, wobei der Anzeigebildschirm (240) ein Rechteck oder ein Rechteck mit abgerundeten Ecken ist.

11. Mobiles Endgerät (10) nach Anspruch 10, wobei die Deckplatte (210) ein Substrat (211) und einen Buckel (212) umfasst, die miteinander verbunden sind, und der Buckel (212) aus einem Rand des Substrats (211) herausragt und wobei das Substrat (211) den Anzeigebildschirm (240) bedeckt und der Buckel (212) in der Rille (114b) aufgenommen ist.

12. Mobiles Endgerät (10) nach Anspruch 11, wobei der Buckel (212) eine dritte Außenfläche (212b) aufweist, die von der Lichteingangslinse (411) weg weist, und der Buckel (212) eine erste Seitenfläche (212a), eine zweite Seitenfläche (211a) und eine dritte Seitenfläche (211b) umfasst, wobei die erste Seitenfläche (212a) zwischen der zweiten Seitenfläche (211a) und der dritten Seitenfläche (211b) eingebunden ist, die zweite Seitenfläche (211a) und die dritte Seitenfläche (211b) einander gegenüber angeordnet sind und sich die erste Seitenfläche (212a) an einem hinteren Ende des Buckels (212) entfernt von dem Substrat (211) befindet, und wobei sich die erste Seitenfläche (212a) und die dritte Außenfläche (212b) treffen, um einen rechten Winkel zu bilden.

13. Mobiles Endgerät (10) nach Anspruch 11, wobei der Buckel (212) eine dritte Außenfläche (212b) aufweist, die von der Lichteingangslinse (411) weg weist, und der Buckel (212) eine erste Seitenfläche (212a) umfasst, die sich an einem hinteren Ende des Buckels (212) entfernt von dem Substrat (211) befindet, wobei eine Breite einer Fase zwischen der ersten Seitenfläche (212a) und der dritten Außenfläche (212b) 0,1 mm bis 0,15 mm beträgt, und wobei das Substrat (211) eine zweite Seitenfläche (211a), eine dritte Seitenfläche (211b) und einer vierte Außenfläche (211c) umfasst, die erste Seitenfläche (212a) die zweite Seitenfläche (211a) und die dritte Seitenfläche (211b) verbindet und die vierte Außenfläche (211c) koplanar mit der dritten Außenfläche (212b) liegt, wobei eine Breite einer Fase zwischen der zweiten Seitenfläche (211a) und der vierten Außenfläche (211c) 0,1 mm bis 0,15 mm beträgt und eine Breite einer Fase zwischen der dritten Seitenfläche (211b) und der dritten Außenfläche (212b) 0,1 mm bis 0,15 mm beträgt.

14. Mobiles Endgerät (10) nach Anspruch 11, wobei der Buckel (212) eine dritte Außenfläche (212b) aufweist, die von der Lichteingangslinse (411) weg weist, und der Buckel (212) eine erste Seitenfläche (212a) umfasst, die sich an einem hinteren Ende des Buckels (212) entfernt von dem Substrat (211) befindet, wobei sich die erste Seitenfläche (212a) und die dritte Außenfläche (212b) treffen, um einen rechten Winkel zu bilden, und wobei das Substrat (211) eine zweite Seitenfläche (211a), eine dritte Seitenfläche (211b) und eine vierte Außenfläche (211c) umfasst, die erste Seitenfläche (212a) die zweite Seitenfläche (211a) und die dritte Seitenfläche (211b) verbindet und die vierte Außenfläche (211c) koplanar mit der dritten Außenfläche (212b) liegt, wobei die zweite Seitenfläche (211a) nahtlos in die vierte Außenfläche (211c) übergeht und die dritte Seitenfläche (211b) nahtlos in die vierte Außenfläche (211c) übergeht.

## Revendications

1. Terminal mobile (10) comprenant :
un ensemble écran d'affichage (200) ; et
un cadre central (100), comprenant un corps de cadre et une partie de transmission de lumière (111) située sur le dessus du corps de cadre,
le corps du cadre comprenant un corps de cadre inférieur (130) et une plaque de revêtement (112) agencés à l'opposé l'un de l'autre, et la partie de transmission de lumière (111) recouvrant la plaque de revêtement (112),
la plaque de revêtement (112) comprenant un deuxième bloc de réception (114), la partie de transmission de lumière (111) comprenant un évidement (111d), et le deuxième bloc de réception (114) dépassant d'un côté de la plaque de revêtement (112) orienté à l'opposé du corps de cadre inférieur (130) et étant reçu dans l'évidement (111d).

2. Terminal mobile (10) selon la revendication 1, une épaisseur de la plaque de revêtement (112) étant inférieure à une épaisseur du corps de cadre inférieur (130).

3. Terminal mobile (10) selon la revendication 2, le corps du cadre comprenant une première surface extérieure (160) et une première surface d'ajustement (112b) reliées l'une à l'autre, la première surface d'ajustement (112b) étant située sur le côté de la plaque de revêtement (112) orienté à l'opposé du corps de cadre inférieur (130), et la première surface extérieure (160) étant située sur une périphérie de la première surface d'ajustement (112b) ; la partie de transmission de lumière (111) comprenant une deuxième surface extérieure (111a) et une deuxième surface d'ajustement (111b) dirigées à l'opposé l'une de l'autre, et un bord de la deuxième surface extérieure (111a) étant relié à un bord de la deuxième surface d'ajustement (111b) ; et la première surface d'ajustement (112b) et la deuxième surface d'ajustement (111b) étant collées l'une à l'autre.

4. Terminal mobile (10) selon la revendication 3, la deuxième surface extérieure (111a) étant reliée en douceur à la première surface extérieure (160).

5. Terminal mobile (10) selon la revendication 3, la plaque de revêtement (112) comprenant un premier bloc de réception (113) dépassant de la première surface d'ajustement (112b) ; le deuxième bloc de réception (114) étant plus proche de l'ensemble d'écran d'affichage (200) que le premier bloc de réception (113) ; et une cavité intérieure du premier bloc de réception (113) étant en communication avec une cavité intérieure du deuxième bloc de réception (114).

6. Terminal mobile (10) selon la revendication 5, le premier bloc de réception (113) comprenant une surface supérieure (113a) ; une fente de passage (114c) étant agencée dans la partie de transmission de lumière (111) et coopérant avec le premier bloc de réception (113), et la fente de passage (114c) pénétrant la deuxième surface extérieure (111a) et la deuxième surface d'ajustement (111b) ; le premier bloc de réception (113) étant agencé dans et traversant la fente de passage (114c) ; et la surface supérieure (113a) étant reliée en douceur à la deuxième surface extérieure (111a).

7. Terminal mobile (10) selon la revendication 3, l'évidement (llld) étant situé sur un côté de la partie de transmission de lumière (111) vers l'ensemble d'écran d'affichage (200), et pénétrant un bord de la deuxième surface extérieure (111a) et un bord de la deuxième surface d'ajustement (111b) ;
le deuxième bloc de réception (114) étant situé sur un bord d'un côté de la première surface d'ajustement (112b) vers l'ensemble écran d'affichage (200), et une partie de la première surface extérieure (160) formant une surface avant (114a) du deuxième bloc de réception (114), et la surface avant (114a) étant reliée en douceur à la deuxième surface extérieure (111a).

8. Terminal mobile (10) selon la revendication 7, le terminal mobile (10) comprenant un module de caméra (400), et le module de caméra (400) comprenant :
une base (413) ayant une structure partielle reçue dans le premier bloc de réception (113) ;
un barillet d'objectif (412) relié à la base (413) et ayant une structure partielle reçue dans le deuxième bloc de réception (114) ; et
une carte de circuit imprimé flexible reliée à la base (413).

9. Terminal mobile (10) selon la revendication 8, le module de caméra (400) comprenant une lentille d'entrée de lumière (411) exposée à l'extérieur du barillet de lentille (412) ; une rainure (114b) étant agencée dans le deuxième bloc de réception (114) et pénétrant la surface avant (114a) ; un premier trou de passage (114c) étant agencé dans le deuxième bloc de réception (114) et pénétrant dans un fond de rainure de la rainure (114b) ; et la lentille d'entrée de lumière (411) étant exposée à travers le premier trou de passage (114c).

10. Terminal mobile (10) selon la revendication 1, comprenant un couvercle de batterie (300), le couvercle de batterie (300) et l'ensemble d'écran d'affichage (200) étant situés des deux côtés du corps du cadre, et l'ensemble d'écran d'affichage (200) comprenant une plaque de couverture (210), une première couche adhésive optique (220), un polariseur (230), un écran d'affichage (240), une deuxième couche adhésive optique (250), une mousse (260) et un dissipateur thermique (270) agencés séquentiellement en direction du couvercle de la batterie (300), l'écran d'affichage (240) étant un rectangle ou un rectangle aux coins arrondis.

11. Terminal mobile (10) selon la revendication 10, la plaque de recouvrement (210) comprenant un substrat (211) et une bosse (212) reliés l'un à l'autre, et la bosse (212) dépassant d'un bord du substrat (211) ; et le substrat (211) recouvrant l'écran d'affichage (240), et la bosse (212) étant reçue dans la rainure (114b).

12. Terminal mobile (10) selon la revendication 11, la bosse (212) ayant une troisième surface extérieure (212b) orientée à l'opposé de la lentille d'entrée de lumière (411), et la bosse (212) comprenant une première surface latérale (212a), une deuxième surface latérale (211a) et une troisième surface latérale (211b), la première surface latérale (212a) étant reliée entre la deuxième surface latérale (211a) et la troisième surface latérale (211b), la deuxième surface latérale (211a) et la troisième surface latérale (211b) étant agencées à l'opposé l'une de l'autre, et la première surface latérale (212a) étant située à une extrémité de la bosse (212) à l'écart du substrat (211) ; et la première surface latérale (212a) et la troisième surface extérieure (212b) se rejoignant pour former un angle droit.

13. Terminal mobile (10) selon la revendication 11, la bosse (212) ayant une troisième surface extérieure (212b) orientée à l'opposé de la lentille d'entrée de lumière (411), et la bosse (212) comprenant une première surface latérale (212a) située à une extrémité de la bosse (212) à l'écart du substrat (211), une largeur d'un chanfrein entre la première surface latérale (212a) et la troisième surface extérieure (212b) étant de 0,1 mm à 0,15 mm ; et le substrat (211) comprenant une deuxième surface latérale (211a), une troisième surface latérale (211b) et une quatrième surface extérieure (211c), la première surface latérale (212a) reliant la deuxième surface latérale (211a) et la troisième surface latérale (211b), et la quatrième surface extérieure (211c) étant coplanaire avec la troisième surface extérieure (212b), une largeur d'un chanfrein entre la deuxième surface latérale (211a) et la quatrième surface extérieure (211c) étant de 0,1 mm à 0,15 mm, et une largeur d'un chanfrein entre la troisième surface latérale (211b) et la troisième surface extérieure (212b) étant de 0,1 mm à 0,15 mm.

14. Terminal mobile (10) selon la revendication 11, la bosse (212) ayant une troisième surface extérieure (212b) orientée à l'opposé de la lentille d'entrée de lumière (411), et la bosse (212) comprenant une première surface latérale (212a) située à une extrémité de la bosse (212) à l'écart du substrat (211), la première surface latérale (212a) et la troisième surface extérieure (212b) se rejoignant pour former un angle droit ; et le substrat (211) comprenant une deuxième surface latérale (211a), une troisième surface latérale (211b) et une quatrième surface extérieure (211c), la première surface latérale (212a) reliant la deuxième surface latérale (211a) et la troisième surface latérale (211b), et la quatrième surface extérieure (211c) étant coplanaire avec la troisième surface extérieure (212b), la deuxième surface latérale (211a) présentant une transition douce vers la quatrième surface extérieure (211c) et la troisième surface latérale (211b) présentant une transition douce vers la quatrième surface extérieure (211c).
